# EUROPEAN PATENT APPLICATION

(11) **EP 1 864 888 A2**
(43) Date of publication of application: **12.12.2007**
(21) Application number: 07109637.4
(22) Date of filing: 05.06.2007
(51) Int. Cl.: B62D 15/02

(54) **Vehicle steering system**

(30) Priority: 06.06.2006 JP 2006157713
(71) Applicant: JTEKT CORPORATION, Chuo-ku Osaka-shi Osaka 542-8502 (JP)
(72) Inventor: Kouchi, Tatsuma JTEKT CORPORATION, Osaka-shi, Osaka 542-8502 (JP); Maeda, Daisuke JTEKT CORPORATION, Osaka-shi, Osaka 542-8502 (JP); Maeda, Shingo JTEKT CORPORATION, Osaka-shi, Osaka 542-8502 (JP); Yamanaka, Kosuke JTEKT CORPORATION, Osaka-shi, Osaka 542-8502 (JP); Ishihara, Atsushi JTEKT CORPORATION, Osaka-shi, Osaka 542-8502 (JP); Maeda, Naoki JTEKT CORPORATION, Osaka-shi, Osaka 542-8502 (JP); Arima, Masanori JTEKT CORPORATION, Osaka-shi, Osaka 542-8502 (JP)
(74) Representative: TBK-Patent

(57) **Abstract**

A vehicle steering system includes: a control member (1) that is manipulated by a driver for controlling a direction of a vehicle; a steering mechanism (2,5) that turns steered road wheels (4) in response to manipulation of the control member (1); an automatic driving mode setting unit (21) that enables an automatic driving control for an automatic driving mode; a plurality of vehicle sensors (11,12,14,15,16,17,18) for detecting various kinds of information which represent behaviors of the vehicle; an output gain switch (20) that switches an output gain for a predetermined vehicle sensor (15,16) of the plurality of vehicle sensors so as to output an appropriate output for the automatic driving mode in response to setting of the automatic driving mode by the automatic driving mode setting unit (21); and an automatic steering controller (20) that automatically controls the steering mechanism while referring to outputs of the plurality of vehicle sensors in the automatic driving mode.

## Description

### BACKGROUND OF THE INVENTION

The present invention relates to a vehicle steering system for moving a vehicle in a desired direction, and more particularly to a vehicle steering system which can perform an automatic steering to park the vehicle in a desired parking position.

A technique is proposed in JP-A-5-58319 in which an automatic driving of a vehicle is realized by an automatic steering system and an automatic control is performed when the traveling vehicle is expected to contact with an obstacle.
In addition, a technique is disclosed in JP-A-10-114272 and JP-A-2006-21722 in which a vehicle steering system is automatically controlled so that a vehicle is guided to a parking position when a parking from back or parallel parking is performed.

In order to realize the automatic driving of the vehicle by the automatic steering system, various types of vehicle sensors are necessary for detecting driving conditions and behaviors of the vehicle. As for the vehicle sensors, since the behavior of the vehicle differs remarkably between when the vehicle is driven at relatively high speeds and when the vehicle is driven to be parked, separate vehicle sensors are necessary for vehicle sensors for the relatively high-speed driving such as those disclosed in JP-A-5-58319 and vehicle sensors for automatic parking control such as those disclosed in JP-A-10-114272 and JP-A-2006-21722.

In this way, many vehicle sensors have to be provided on the vehicle, and moreover, separate vehicle sensors which are different in sensitivity from one another are necessary for the relatively high-speed running and the automatic parking control which is performed at low speeds. Accordingly, this situation has caused a problem that the realization of the automatic steering is extremely difficult.

### SUMMARY OF THE INVENTION

The invention has been made in these situations, and an object thereof is to provide a vehicle steering system in which detection outputs of vehicle sensors are switched so as to be used appropriately for automatic driving control when a automatic driving control is performed by the vehicle steering system.

In addition, another obj ect of the invention is to provide a vehicle steering system which can realize an automatic parking control by making effective use of outputs of vehicle sensors such as a yaw rate sensor and/or a lateral acceleration sensor for detecting a behavior of a vehicle when the vehicle is driven at high speeds.

With a view to attaining the objects of the invention, according to a first aspect of the invention, there is provided a vehicle steering system comprising:
a control member that is manipulated by a driver for controlling a direction of a vehicle;
a steering mechanism that turns steered road wheels in response to manipulation of the control member;
an automatic driving mode setting unit that enables an automatic driving control for an automatic driving mode;
a plurality of vehicle sensors for detecting various kinds of information which represent behaviors of the vehicle;
an output gain switch that switches an output gain for a predetermined vehicle sensor of the plurality of vehicle sensors so as to output an appropriate output for the automatic driving mode in response to setting of the automatic driving mode by the automatic driving mode setting unit; and
an automatic steering controller that automatically controls the steering mechanism while referring to outputs of the plurality of vehicle sensors in the automatic driving mode.

According to a second aspect of the invention, there is provided a vehicle steering system as set forth in the first aspect of the invention, in which the automatic driving mode is an automatic parking control mode, and the vehicle sensor whose output gain is switched by the output gain switch includes a yaw rate sensor for detecting a yaw rate of the vehicle so that the output gain is switched in such a manner as to increase a resolution in a low speed area.

In the configurations described above, when the driver manipulates the control member, the steered road wheels are turned by the steering mechanism so that the vehicle can be steered in a desired direction.
In addition, when the driver manipulates the automatic driving mode setting unit, a state can be produced in which the automatic driving control or, for example, the automatic parking control is performed. In the automatic parking control, the steered road wheels are turned by the automatic steering control units so that the vehicle is moved to a predetermined parking position.

While the plurality of vehicle sensors are provided on the vehicle for detecting the behavior of the vehicle, the output gain of the predetermined vehicle sensor of the plurality of vehicle sensors is switched by the gain switching unit at the time of automatic parking control.
For example, an output gain of the yaw rate sensor for detecting the yaw rate of the vehicle is determined such that an effective detection output is led out within a vehicle driving speed range of, for example, 0 to 150 km/h.

In the automatic parking control, however, since the driving speed of the vehicle is on the order of 10 km/h or slower at the fastest, the output range of the yaw rate sensor is limited to a narrow range for low speeds.
Then, the gain of a detection output of the yaw rate sensor is switched by the gain switching unit at the time of automatic parking control, so that the resolution of a detection output which results when the driving speed is, for example, 10 km/h or slower is increased.

By this configuration, the detection output of the yaw rate sensor can be made use of in a more effective fashion so as to be reflected on the automatic parking control of the vehicle.
While in the above description, the yaw rate sensor is described as an example of the vehicle sensor whose output gain is switched by the gain switching unit, the relevant vehicle sensor is not limited to the yaw rate sensor, and hence, other vehicle sensors than the yaw rate sensor such as a lateral acceleration sensor, a vehicle speed sensor and the like can be raised as the vehicle sensor whose output gain is so switched.

In addition, while in the above description, the invention is described as being applied to the automatic parking control, the application of the invention is not limited to the control at the time of parking, and hence, the invention can also be applied to an automatic driving control when the vehicle is driven at high speeds.

### BRIEF DESCRIPTION OF THE DRAWINGS

Fig. 1 is an illustration drawing which illustrates the configuration of a vehicle steering system according to an embodiment of the invention.
Fig. 2 is a block diagram illustration which illustrates the switching of an output gain of a yaw rate sensor 16 which is given to a control unit 20.
Figs. 3 are graphs showing sensor output characteristics.

### DETAILED DESCRIPTION OF PREFERRED EMBODIMENTS

Hereinafter, an embodiment of the invention will be described in detail with reference to the accompanying drawings.

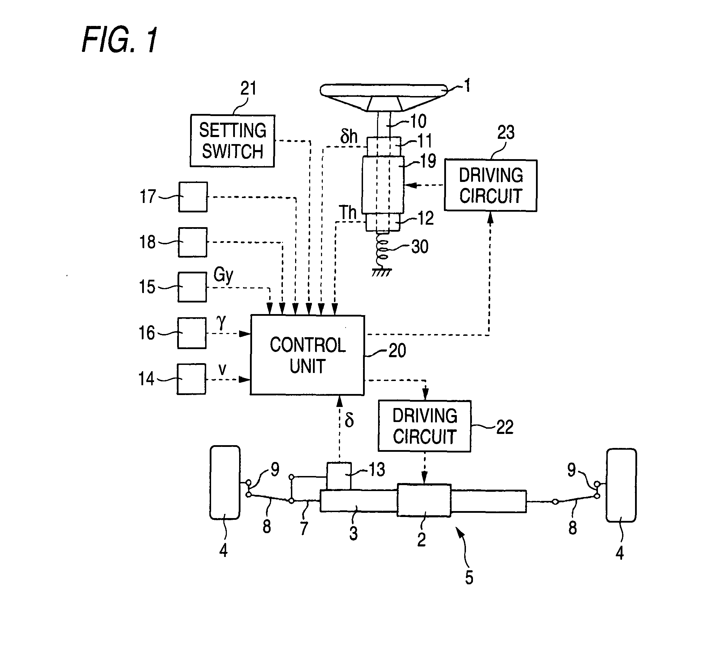

Fig. 1 is an illustration drawing which illustrates a configuration of a vehicle steering system according to an embodiment of the invention, and in the drawing, a configuration of a so-called steer-by-wire system is shown. The vehicle steering system includes a steering wheel 1 which is a control member that is manipulated by a driver for controlling the direction of the vehicle, a steering actuator 2 which is driven in response to rotational manipulation of the steering wheel 1 and a steering gear 3 which transmits the driving force of the steering actuator 2 to, for example, front left and right road wheels 4 as steered road wheels. A mechanical connection for mechanically transmitting a steering torque applied to the steering wheel 1 to the steering mechanism 5 is not provided between the steering wheel 1 and a steering mechanism 5 including the steering actuator 2, and the steering actuator 2 is controlled to be driven according to a manipulation amount (a manipulation angle or manipulating torque) of the steering wheel 1, so as to turn the road wheels 4.

The steering actuator 2 can be made up of an electric motor such as a known brushless motor. The steering gear 3 has a motion transforming mechanism for transforming a rotational motion of an output shaft of the steering actuator 2 into linear motions (linear motions in lateral directions of the vehicle) of steering rods 7. The movements of the steering rods 7 are transmitted to the road wheels 4 via tie rods 8 and knuckle arms 9, so as to change toe angles (turning angles) of the road wheels 4. A known steering gear can be used for the steering gear 3, and there is no limitation on the configuration thereof, provided that the movement of the steering actuator 2 can be transmitted to the road wheels 4 in such a manner as to change the turning angles thereof. In addition, a wheel alignment is set such that the road wheels can returns to a straight-ahead position by a self aligning torque in a state that the steering actuator 2 is not driven.

The steering wheel 1 is connected to a rotational shaft 10 which is supported rotatably on a vehicle body side. A counterforce actuator 19 is provided on the rotational shaft 10 for generating a counterforce to be applied to the steering wheel 1. The counterforce actuator 19 can be made up of an electric motor such as a brushless motor which has an output shaft which is integrated with the rotational shaft 10.

An elastic member 30 is provided between the vehicle body and the rotational shaft 10 for applying an elastic force in a direction in which the steering wheel 1 is caused to turn back to the straight-ahead steering position. The elastic member 30 can be made up of, for example, a spring for applying an elastic force to the rotational shaft 10. When no torque is applied to the rotational shaft 10 by the counterforce actuator 19, the steering wheel 1 is allowed to turn back to the straight-ahead steering position by virtue of the elastic force of the elastic member 30.

An angle sensor 11 is provided for detecting a rotational angle δh of the rotational shaft 10 in order to detect a manipulation angle (a rotational angle) of the steering wheel 1. In addition, a torque sensor 12 is provided for detecting a torque transmitted by the rotational shaft 10 in order to detect a manipulation torque Th which is applied to the steering wheel 1 by the driver. Furthermore, a steered angle sensor 13 for detecting a steered angle (a turning angle produced by the steering mechanism 5) δ of the vehicle is made up of a potentiometer for detecting an operation amount of the steering rods 7 which correspond to the steered angle of the vehicle. In addition, a speed sensor 14 for detecting a vehicle velocity V, a lateral acceleration sensor 15 for detecting a lateral acceleration Gy of the vehicle and a yaw rate sensor 16 for detecting a yaw rate γ of the vehicle are provided to the vehicle.

Furthermore, a rearview monitor camera 17 for picking up a rearview at the rear of the vehicle and an obstacle sensor 18 for emitting detection signals (for example, infrared rays or ultrasonic waves) to sides and obliquely rearward directions of the vehicle to sense obstacles lying to sides of the vehicle and in obliquely rearward positions of the vehicle and to detect distances to those obstacles so sensed are provided to the vehicle.
The angle sensor 11, torque sensor 12, steered angle sensor 13, speed sensor 14, lateral acceleration sensor 15 and yaw rate sensor 16 are connected to a control unit 20 which is made up of a computer. The control unit 20 is configured to control the steering actuator 2 and the counterforce actuator 19 via drive circuits 22, 23.

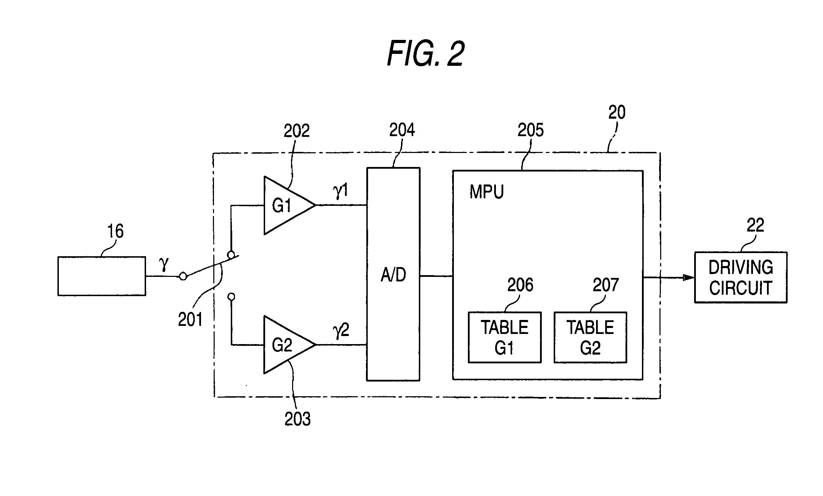

In addition, an automatic driving mode setting switch 21 is provided in a position where the driver can manipulate the switch.
When the automatic driving mode setting switch 21 is switched on, a signal which represents that the automatic driving mode setting switch 21 is on is given to the control unit 20, whereby the vehicle steering system is then automatically controlled by the control unit 20. In the case of an automatic parking mode, detection outputs of the rearview monitor camera 17 and the obstacle sensor 18 are effectively used. As an example, Fig. 2 shows an illustration of a block diagram which illustrates switching of an output gain of the yaw rate sensor 16 which is given to the control unit 20. A yaw rate γ of the vehicle which is detected by the yaw rate sensor 16 is switched to be given to an amplifier circuit 202 or an amplifier circuit 203 by a selector switch 201 in the control unit 20. The amplifier circuit 202 has an amplification factor of a predetermined relatively small gain G1, while the amplifier circuit 203 has an amplification factor of a predetermined relatively large gain G2 (G2 > G1).

A yaw rate γ1 or γ2 which is amplified at the amplifier circuit 202 or 203 is converted from an analog signal to a digital signal by an A/D converter circuit 204 and is then given to an MPU (micro processing unit) 205.

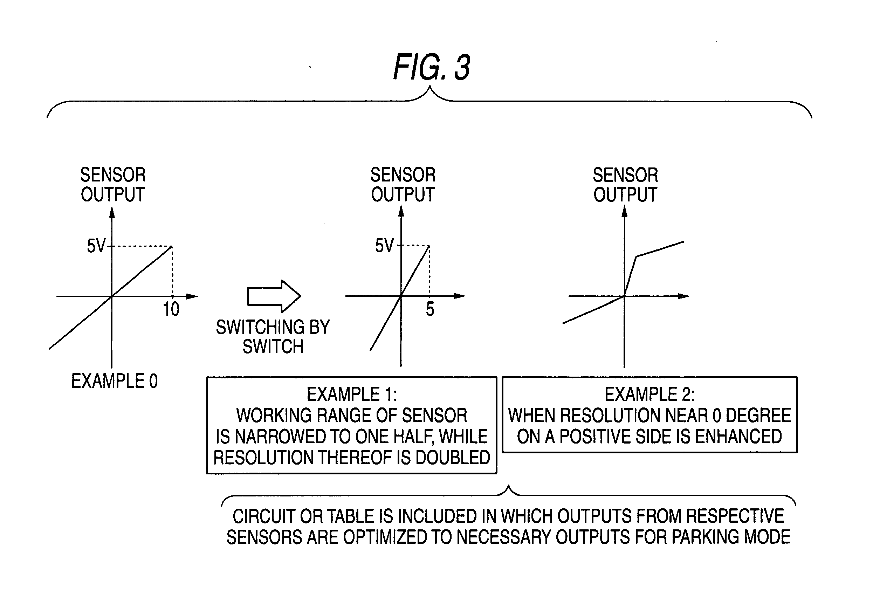

A more specific description will be made with reference to sensor output characteristics shown in Fig. 3, as well.
The vehicle steering system shown in Fig. 1 is normally in a steer-by-wire mode, and the drive circuits 22, 23 are controlled so as to output steering forces suitable for the steer-by-wire mode by the control unit 20. In this case, the switch 201 is switched so that the yaw rate γ which is detected by the yaw rate sensor 16 is given to the amplifier circuit 202, and the yaw rate γ1 which is amplified by the gain G1 exhibits an output characteristic shown in Example 0 of Fig. 3A, for example. Namely, the yaw rate γ1 is amplified so that yaw rate and voltage are associated with each other in such a manner that an output of "5V" can be obtained with an input of "10."

On the other hand, when the automatic parking mode setting switch 21 is switched on so that the vehicle steering system is in the automatic parking mode, the switch 201 is switched so that the output γ of the yaw rate sensor 16 is given to the amplifier circuit 203 and is then amplified by the gain G2, so as to obtain a yaw rate of γ2.
The yaw rate γ2 has a characteristic shown, for example, in Example 1 of Fig. 3 and is associated in such a manner that an output of "5V" can be obtained with an input of "5."

Namely, the output characteristic of the sensor shown in Example 1 of Fig. 3 have a double sensitivity (resolution) when compared to the output characteristic of the sensor shown in Example 0 of Fig. 3. More specifically, while the detection range (working range) of the sensor is narrowed to one half, but the resolution is doubled.
Normally, in the automatic parking mode, the driving speed of the vehicle is slow or low to be 10 km/h or slower, and the yaw rate (speed at which the orientation of the vehicle changes) is relatively moderate. Therefore, even in the event that the working range of the yaw rate sensor 16 is narrowed, for example, to one half, there is caused no problem in detecting a yaw rate. Then, an output which is more suitable for the automatic parking mode is obtained by making the resolution of the sensor double while the working range of the sensor is narrowed to one half.

As a modification of the above embodiment, another configuration in which an output of the yaw rate sensor is switched between a normal mode and the automatic parking mode can be adopted. Specifically, the switching is determined based on which of the two tables 206, 207 installed in the MPU 205 is used. The MPU 205 includes a data conversion table 206 which corresponds to the gain G1 and a data conversion table 207 which corresponds to the gain G2. At the MPU 205, the corresponding table 206 or 207 is applied to a yaw rate so inputted thereinto for gain conversion.
In Fig. 2, the output γ of the yaw rate sensor 16 is given to the MPU 205 by way of the amplifier circuit 202 irrespective of the signal from the automatic driving mode switch 21. In this case, when the MPU 205 obtains a sensor output by applying the table 206 to the yaw rate γ1 given thereto, for example, the output characteristic shown in Example 0 of Fig. 3 is obtained.

On the other hand, the table 207 is applied to the yaw rate γ1 so as to obtain a sensor output in the automatic parking mode, whereby an output characteristic shown in Example 2 of Fig. 3 is obtained.
The output characteristic shown in Example 2 of Fig. 3 is an output characteristic in which the resolution near a rotational angle of 0° on a positive side is increased.
In this way, taking the output of the yaw rate sensor 16 for example, one of features of the embodiment is that the amplifier circuits 202, 203 or the tables 206, 207 which can be switched between the normal mode and the automatic parking mode so as to optimize the output of the yaw rate sensor 16 to necessary output ranges for the respective modes is provided.

Incidentally, while in the configuration of the block diagram illustration shown in Fig. 2, the selector switch 201, the amplifier circuit 202 and the amplifier circuit 203 are provided and the table 206 and the table 207 are included, a configuration may be adopted in which for example, only either the switch and circuits or the tables are provided, for example, the selector switch 201, the amplifier circuit 202 and the amplifier circuit 203 are provided and the tables 206, 207 are omitted, or a configuration may be adopted in which the selector switch 201, the amplifier circuit 202 and the amplifier circuit 203 are excluded from the configuration shown in the block diagram of Fig. 2.

While in the description that has been made heretofore, the invention is described by taking the yaw rate sensor 16 for example embodiment, the vehicle sensors other than the yaw rate sensor 16 such as the lateral acceleration sensor 15, the vehicle speed sensor 14, a throttle position sensor and the like can be raised, for example, as sensors whose detection outputs are preferably switched between the normal mode and the automatic parking mode.
In addition, while in the embodiment, the output gain of the sensor is described as being switched between the normal mode and the automatic parking mode, the output gain of the sensor may be made to be switched between the normal mode and, for example, an automatic driving control mode. For example, when the vehicle enters a high-way driving state, the vehicle steering system can be made to be switched from the normal mode to the automatic driving control mode, so as to increase a detecting resolution for a steering angle δh of the steering wheel 1 which is detected by the angle sensor 11 (refer to Fig. 1) for detecting a rotational angle of the rotational shaft 10, whereby the detection accuracy within a small steering angle range is increased for stabilizing control of the behavior of the vehicle, or the same can be made use of in order to enhance the accuracy of a lane keeping control of the vehicle.

Furthermore, while in the embodiment, the invention is described as being applied to the steer-by-wire system, the invention can widely be applied to vehicle steering systems in which the steering actuator for imparting steering force to the steering mechanism of the vehicle is provided. Vehicle steering systems like this include an electric power steering system, a hydraulic steering system and the like.

The embodiments described above are to be regard as illustrative rather than restrictive. Variations and changes may be made by others, and equivalents employed, without departing from spirit of the present invention. Accordingly, it is intended that all variation, changes and equivalents which fall within the spirit and scope of the present invention as defined in the claims be embraced thereby.
A vehicle steering system includes: a control member that is manipulated by a driver for controlling a direction of a vehicle; a steering mechanism that turns steered road wheels in response to manipulation of the control member; an automatic driving mode setting unit that enables an automatic driving control for an automatic driving mode; a plurality of vehicle sensors for detecting various kinds of information which represent behaviors of the vehicle; an output gain switch that switches an output gain for a predetermined vehicle sensor of the plurality of vehicle sensors so as to output an appropriate output for the automatic driving mode in response to setting of the automatic driving mode by the automatic driving mode setting unit; and an automatic steering controller that automatically controls the steering mechanism while referring to outputs of the plurality of vehicle sensors in the automatic driving mode.

## Claims

1. A vehicle steering system comprising:
a control member (1) that is manipulated by a driver for controlling a direction of a vehicle;
a steering mechanism (2, 5) that turns steered road wheels (4) in response to manipulation of the control member (1);
an automatic driving mode setting unit (21) that enables an automatic driving control for an automatic driving mode;
a plurality of vehicle sensors (11, 12, 14, 15, 16, 17, 18) for detecting various kinds of information which represent behaviors of the vehicle;
an output gain switch (20) that switches an output gain for a predetermined vehicle sensor (15, 16) of the plurality of vehicle sensors so as to output an appropriate output for the automatic driving mode in response to setting of the automatic driving mode by the automatic driving mode setting unit; and
an automatic steering controller (20) that automatically controls the steering mechanism (2, 5) while referring to outputs of the plurality of vehicle sensors in the automatic driving mode (20).

2. The vehicle steering system according to claim 1, wherein
the automatic driving mode is an automatic parking control mode, and
the vehicle sensor whose output gain is switched by the output gain switch (20) includes a yaw rate sensor (16) for detecting a yaw rate of the vehicle so that the output gain is switched in such a manner as to increase a resolution in a low speed area.

3. A method of controlling a vehicle steering system including a control member that is manipulated by a driver for controlling a direction of a vehicle, a steering mechanism that turns steered road wheels in response to a manipulation of the control member, in which a plurality of vehicle sensors for detecting various kinds of information which represent behaviors of the vehicle are provided in the vehicle, the method comprising:
enabling an automatic driving control for an automatic driving mode;
switching an output gain for a predetermined vehicle sensor of the plurality of vehicle sensors so as to output an appropriate output for the automatic driving mode in response to setting of the automatic driving mode; and
automatically controlling the steering mechanism while referring to outputs of the plurality of vehicle sensors in the automatic driving mode.
